# EUROPÄISCHE PATENTSCHRIFT

(11) **EP 1 477 343 B1**
(45) Veröffentlichungstag und Bekanntmachung des Hinweises auf die Patenterteilung: **21.06.2006**
(21) Anmeldenummer: 04007990.7
(22) Anmeldetag: 01.04.2004
(51) Int. Cl.: B60G 17/027

(54) **Fahrzeug-Federungssystem mit veränderbarem Höhenstand des Fahrzeug-Aufbaus**
Vehicle suspension system with height adjustable chassis
Système de suspension pour véhicule avec hauteur de châssis variable

(30) Priorität: 16.05.2003 DE 10321997
(43) Veröffentlichungstag der Anmeldung: 17.11.2004
(73) Patentinhaber: Bayerische Motoren Werke Aktiengesellschaft, 80809 München (DE)
(72) Erfinder: Schmidt, Roland, 82131 Stockdorf (DE)

(56) Entgegenhaltungen:
- EP-A- 1 403 103
- DE-A- 10 121 918
- DE-A- 19 935 865
- US-A- 5 009 451
- PATENT ABSTRACTS OF JAPAN Bd. 2000, Nr. 24, 11. Mai 2001 (2001-05-11) & JP 2001 191776 A (TOYOTA MOTOR CORP), 17. Juli 2001 (2001-07-17)

## Beschreibung

Die Erfindung betrifft ein Fahrzeug-Federungssystem nach dem Oberbegriff des Anspruchs 1. Zum bekannten Stand der Technik wird beispielshalber auf die DE 101 21 918 A1 verwiesen.

Dem Fachmann für Fzg.-Federungssysteme grundsätzlich bekannt ist eine sog. Zuganschlagfeder, die üblicherweise innerhalb eines Stoßdämpfers, der Bestandteil des Fahrzeug-Federungssystems bzw. einer Fahrzeug-Radaufhängung ist, vorgesehen ist. Solange sich der Fahrzeug-Aufbau in Ruhelage oder Neutrallage befindet oder solange die Tragfedern, über welche der Fzg.-Aufbau gegenüber den Fzg.-Radführungselementen abgestützt ist, im Fahrbetrieb nur geringfügig (dynamisch) ausfedern, sind die jeweiligen Zuganschlagfedern unwirksam, da sie (zumindest) mit einem Ende von einem zugeordneten Anschlag beabstandet sind. Bei intensiveren Ausfederungsvorgängen hingegen lässt sich mit einer Zuganschlagfeder eine stark progressive Federkennlinie der zugehörigen Fzg.-Tragfeder erreichen, indem ab einem bestimmten Ausfederungsweg (ausgehend von der Neutrallage) die zunächst mit (zumindest) einem Ende freiliegende Zuganschlagfeder an einem Anschlag zum Anliegen kommt und bei noch weiterem Ausfedern über diesen Anschlag üblicherweise komprimiert wird. Dann ist also der Tragfeder ein weiteres Federelement, nämlich die Zuganschlagfeder, zugeschaltet, die einem weiteren Ausfedern zusätzlich entgegenwirkt.

Bei Fahrzeugen, deren Höhenstand verändert werden kann, d.h. mit einstellbar veränderbarem Abstand zwischen einem Radführungselement und dem Fzg.-Aufbau, verändert sich mit einer statischen Verstellung des Höhenstandes zwangsläufig der bei Neutrallage des Fzg.-Aufbaus vorliegende Abstand zwischen der hierbei nicht aktiven Zuganschlagfeder und dem zugehörigen Anschlag. Dies hat zur Folge, dass bei dynamischen Ausfederungsvorgängen im Fahrbetrieb in Abhängigkeit vom jeweils eingestellten Höhenstand die Zuganschlagfeder nach unterschiedlichen Ausfederungswegen zum Tragen kommt. Da ein daraus resultierendes unterschiedliches Feder-Dämpfer-Verhalten bei unterschiedlichen (statischen) Fzg.-Höhenständen unerwünscht ist, ist in der eingangs genannten DE 101 21 918 A1 vorgeschlagen, den genannten Anschlag in Abhängigkeit vom Fahrzeug-Höhenstand unterschiedlich zu positionieren. Dies erfolgt mittels einer Zylinder-Kolbeneinheit durch gesteuerte Zufuhr bzw. Abfuhr eines Hydraulikmediums in bzw. aus deren Arbeitskammer.

Da eine derartige gesteuerte Verlagerung bzw. Positionierung des besagten Anschlags für die Zuganschlagfeder sowohl regelungstechnisch aufwändig als auch energetisch ungünstig ist, soll mit der vorliegenden Erfindung ein demgegenüber vereinfachtes Fzg.-Federungssystem nach dem Oberbegriff des Anspruchs 1 aufgezeigt werden, bei dem der Anschlag selbsttätig in Abhängigkeit vom Fahrzeug-Höhenstand und somit vom Abstand zwischen dem Radführungselement und dem Fahrzeug-Aufbau entsprechend verlagert wird (= Aufgabe der vorliegenden Erfindung).
Zur Lösung dieser Aufgabe werden im Zusammenwirken mit den Merkmalen des Oberbegriffs des Anspruchs 1 die kennzeichnenden Merkmale des Anspruchs 1 vorgeschlagen. Vorteilhafte Weiterbildungen sind Inhalt der Unteransprüche.

Allgemein gesprochen ist somit die Position des Anschlags für die Zuganschlagfeder so veränderbar, dass letztere unabhängig vom jeweiligen Höhenstand des Fzg.-Aufbaus den (dynamischen) Aus-Federweg der Tragfeder alleine im wesentlichen unverändert lässt, d.h. dass praktisch bei jedem der möglichen Höhenstände die Zuganschlagfeder nach einem im wesentlichen gleichen Aus-Federweg der Tragfeder am Anschlag zum Anliegen kommt und erst dann wirksam wird. Diese Verlagerung des Anschlags der Zuganschlagfeder soll dabei selbsttätig mit einer Veränderung des statischen Höhenstandes einhergehen, und zwar ohne dass hierfür aufwändige oder in aufwändiger Weise anzusteuernde Verstelleinheiten erforderlich sind.

Hierfür soll der Anschlag an einem in einem sog. Stütz-Zylinder geführten Verlagerungs-Kolben vorgesehen oder abgestützt sein, der mit seiner dem Anschlag abgewandten Seite einen mit einem Hydraulikmedium befüllten Stützraum im Stütz-Zylinder begrenzt, in welchem ferner ein erstes sog. Nachstell-Federelement zwischen dem Verlagerungs-Kolben und dem Boden des Stütz-Zylinders eingespannt ist. Diesem Nachstell-Federelement ist ein zweites sog. Abstands-Federelement, das zwischen dem Anschlag und der Zuganschlagfeder abgestützt ist, entgegengerichtet. Bei geeigneter Anordnung des sog. Stütz-Zylinders wird dann bei einer Veränderung des Höhenstandes das Nachstell-Federelement oder das Abstands-Federelement entlastet, wonach vom jeweils anderen Federelement der Verlagerungs-Kolben (und somit der Anschlag) soweit verschoben wird, bis sich wieder ein Kräftegleichgewicht am Verlagerungs-Kolben eingestellt hat. Da das sog. Abstands-Federelement zwischen dem Verlagerungs-Kolben und der Zuganschlagfeder eingespannt bzw. abgestützt ist, ist mit diesem Kräftegleichgewicht selbsttätig wieder der vor der Veränderung des Höhenstandes vorliegende Abstand zwischen dem Verlagerungs-Kolben und der Zuganschlagfeder hergestellt.

Indem dabei der sog. Verlagerungs-Kolben mit seiner dem Anschlag abgewandten Seite einen mit einem Hydraulikmedium befüllten sog. Stützraum im Stütz-Zylinder begrenzt, ist gewährleistet, dass die Zuganschlagfeder bei Erreichen des Anschlags auch tatsächlich wirksam wird. Dann nämlich stützt sich der Verlagerungs-Kolben am Hydraulikmedium im Stützraum des Stütz-Zylinders ab. Eine Verlagerung des Verlagerungs-Kolbens in Verbindung mit einer Höhenstands-Veränderung wird jedoch nicht durch aktive Zufuhr oder Abfuhr von Hydraulikmedium in den oder aus dem Stützraum veranlasst, da hierfür eine geeignete Fördervorrichtung erforderlich wäre. Vielmehr erfolgt dies - wie im vorhergehenden Absatz geschildert - durch das Nachstell-Federelement bzw. das Abstands-Federelement. Jedoch ist es erforderlich, bei einer Veränderung des Höhenstandes in den sog. Stützraum zusätzliches Hydraulikmedium einzuleiten oder aus dem Stützraum einen Teil des Hydraulikmediums zu entfernen, wenn der Anschlag (für die Zuganschlagfeder) bzw. der Verlagerungs-Kolben verschoben bzw. verlagert wird.

Bei üblichen Bauarten eines Fzg.-Federungssystems, bspw. eines Fzg.-Luftfedersystems, bei dem die Tragfeder eine Luftfeder ist, bildet das Dämpferrohr oder Gehäuse des im Inneren der Luftfeder bzw. Tragfeder angeordneten Stoßdämpfers das sog. Radführungselement für das abgefederte Fzg.-Rad, während die Zuganschlagfeder innerhalb des Dämpfer-Gehäuses praktisch auf der Kolbenstange des Stoßdämpfers geführt und sich mit einem Ende bspw. am Dämpferkolben abstützend derart angeordnet ist, dass nach einem gewissen Aus-Federweg der Luftfeder/Tragfeder (aus der Neutrallage heraus) die Zuganschlagfeder mit ihrem anderen Ende an einem dämpfergehäusefesten Anschlag zum Anliegen kommt. Bei einer solchen Bauart ist nun gemäß der vorliegenden Erfindung der Anschlag und somit auch der sog. Verlagerungs-Kolben innerhalb des Dämpfer-Gehäuses verschiebbar gegenüber der Stoßdämpfer-Kolbenstange geführt.

Es wurde bereits erwähnt, dass der Stützraum des Stütz-Zylinders einhergehend mit einer Verschiebung oder Verlagerung des Verlagerungs-Kolbens mit zusätzlichem Hydraulikmedium befüllt wird oder dass hierbei ein Teil des Hydraulikmediums aus dem Stützraum abgeführt wird. Bei der soweit beschriebenen Anordnung des genannten Anschlags und des Verlagerungs-Kolbens im Dämpfer-Gehäuse befindet sich selbstverständlich auch der sog. Stütz-Zylinder mit dem Stützraum in diesem und es kann als Hydraulikmedium vorteilhafterweise das Hydraulikmedium des üblicherweise hydraulischen Stoßdämpfers verwendet werden. Es ist lediglich sicherzustellen, dass Hydraulikmedium aus einem Hydraulikraum des Stoßdämpfers in den sog. Stützraum gelangen oder aus diesem heraus zurückgeführt werden kann. Hierfür kann eine geeignete, insbesondere geeignet dimensionierte Hydraulikleitung vorgesehen sein.

In der soeben genannten Hydraulikleitung zwischen dem Stützraum und einem stets Hydraulikmedium (ggf. unter geringem Druck) enthaltenden sog. Hydraulikraum des Stoßdämpfers kann ein geeignetes Drosselelement vorgesehen sein, das derart dimensioniert ist, dass nur eine relativ bzw. sehr langsame Verlagerung des Verlagerungs-Kolbens möglich ist. Hiermit ist gewährleistet, dass sich die Zuganschlagfeder, sobald sie mit dem am Verlagerungs-Kolben vorgesehenen oder abgestützten Anschlag in Kontakt kommt, tatsächlich am im Stützraum des Stütz-Zylinders befindlichen Hydraulikmedium abstützen kann, ohne dass durch diese Krafteinwirkung der Verlagerungs-Kolben (und somit der Anschlag) sofort nennenswert verschoben wird. Dabei ist es im Sinne einer vorteilhaften Weiterbildung der Erfindung möglich, den freien Durchström-Querschnitt des Drosselelements gezielt veränderbar zu gestalten (d.h. ein entsprechend ansteuerbares Ventil vorzusehen) und/oder ein mit einem Rückschlagventil versehenen Bypass zum genannten Drosselelement vorzusehen. Mit beiden Varianten kann das Ansprechverhalten der Zuganschlagfeder auf relativ einfache Weise verändert werden, indem nämlich variiert wird, wie stark der Verlagerungs-Kolben gegenüber der über die Zuganschlagfeder eingeleiteten Kraft quasi "nachgibt", d.h. unter Einfluss dieser Kraft verschoben wird. Bspw. kann jegliche Verschiebung unter Krafteinwirkung praktisch ausgeschlossen werden, wenn eine Abfuhr von Hydraulikmedium aus dem Stützraum verhindert wird. Ein genannter Bypass zum Drosselelement mit integriertem Rückschlagventil hingegen erlaubt es, die Geschwindigkeit, mit der der Anschlag bei einer Veränderung des Höhenstandes nachgestellt, d.h. verlagert wird, für die beiden möglichen Nachstell-Richtungen unterschiedlich zu gestalten.

Bei der soweit beschriebenen üblichen Bauart, bei welcher das freie Ende der Dämpfer-Kolbenstange am Fzg.-Aufbau angebunden ist, während das Dämpfer-Gehäuse ein Radführungselement darstellt, und wobei im Dämpfer-Gehäuse der sog. Stütz-Zylinder und der Verlagerungs-Kolben vorgesehen sind, können diese letztgenannten Elemente im wesentlichen im dem Fahrzeug-Aufbau zugewandten Endabschnitt des Stoßdämpfer-Gehäuses vorgesehen sein, wobei dann der Stütz-Zylinder quasi zum Fahrzeug-Aufbau hin geschlossenen und zum Fahrzeug-Rad hin offen ist und sich der Stütz-Raum auf der dem Fahrzeug-Aufbau zugewandten Seite des Verlagerungs-Kolbens befindet. Die genannte, den Stützraum mit Hydraulikmedium versorgende Hydraulikleitung kann dann in einem das Hydraulikmedium des Stoßdämpfers enthaltenden Raum im Bereich des dem Fahrzeug-Rad zugewandten Endabschnittes des Stoßdämpfer-Gehäuses münden.

Im Sinne einer besonders kompakten Bauweise ist es alternativ jedoch auch möglich, dass der zum Fahrzeug-Rad hin geschlossene und zum Fahrzeug-Aufbau hin offene Stütz-Zylinder nahe des Dämpferkolbens quasi untenliegend vorgesehen ist und sich somit im Stoßdämpfer unterhalb des Hydraulik-Flüssigkeitsstandes befindet. Bevorzugt ist dabei über einen definierten Ringspalt zwischen dem Verlagerungs-Kolben und der Dämpferkolben-Stange und/oder zwischen dem Verlagerungs-Kolben und dem Stütz-Zylinder ein Übertritt von Hydraulikmedium in den bzw. aus dem Stützraum möglich. Auch hierbei kann durch den Einbau von Rückschlagventilen die Nachstellgeschwindigkeit richtungsabhängig angepasst werden.

Im folgenden wird die Erfindung anhand zweier Ausführungsbeispiele weiter erläutert, wobei die beigefügten **Figuren 1, 2** nur die wesentlichen Elemente eines bevorzugten Ausführungsbeispiels eines erfindungsgemäßen Fahrzeug-Federungssystems in einer ersten Bauart bei zwei verschiedenen Höhenständen des Fzg.-Aufbaus zeigen, während in **Figur 3** eine zweite Bauart bzw. Ausführungsform dargestellt sind. Gezeigt ist jeweils ein Längsschnitt durch einen Abschnitt eines erfindungsgemäß gestalteten Fzg.-Stoßdämpfers, der Bestandteil eines erfindungsgemäßen Fzg.-Federungssystems ist, wobei in sämtlichen Figuren für die gleichen Bauelemente die gleichen Bezugsziffern verwendet sind.

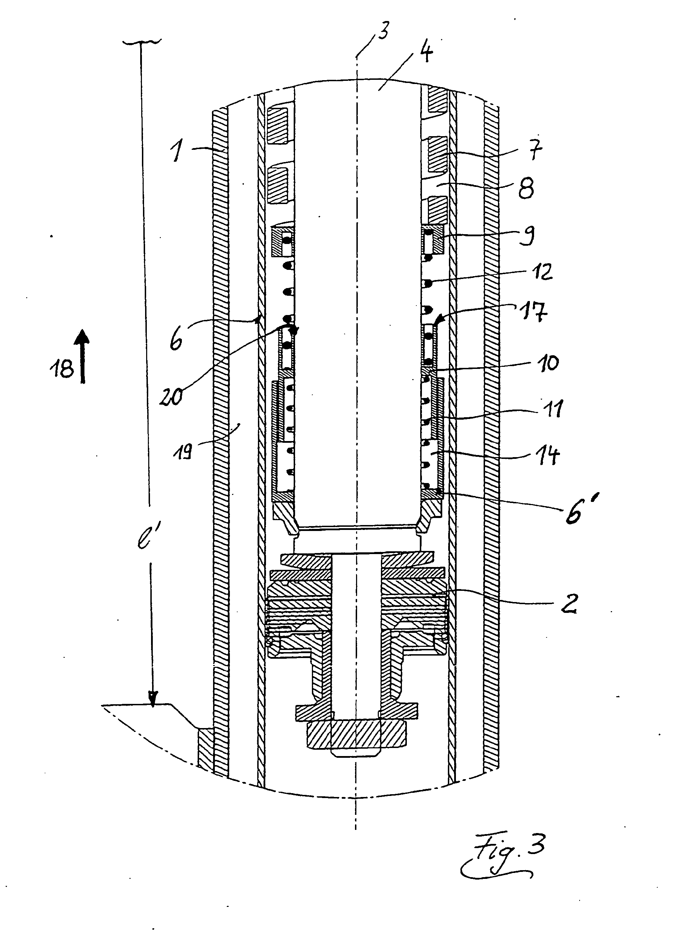

Mit der Bezugsziffer 1 ist das Gehäuse eines im Fahrwerk eines Kraftfahrzeugs verbauten hydraulischen Stoßdämpfers bezeichnet, innerhalb dessen wie üblich ein lediglich in **Fig.3** sichtbarer Dämpferkolben 2 in Richtung der Stoßdämpfer-Längsachse 3 längs-verschiebbar geführt ist. Während die zugehörige aus dem Dämpfer-Gehäuse 1 herausgeführte Dämpfer-Kolbenstange 4 mit ihrem nicht dargestellten (sowohl in den Figuren als auch in der Einbausituation) oberen freien Ende am ebenfalls nicht dargestellten Fahrzeug-Aufbau gelenkig angebunden ist, fungiert das Dämpfer-Gehäuse 1 als Radführungselement und führt bzw. trägt somit über geeignete Zwischenelemente mit seinem (sowohl in den Figuren als auch in der Einbausituation) unteren Ende ein Rad des Kraftfahrzeugs.

Nach oben, d.h. zum Fzg.-Aufbau hin ist das zylinderförmige Dämpfer-Gehäuse 1 mittels einer den Durchtritt der Kolbenstange 4 unter Zwischenlage einer geeigneten Dichtungsanordnung ermöglichenden Abschlussbuchse 5 abgeschlossen, durch die (über einen geeigneten Absatz) im Innenraum des Gehäuses 1 ein sog. Führungszylinder 6 positioniert ist, der sich bei beiden Ausführungsbeispielen im wesentlichen über die gesamte Länge des Gehäuses 1 erstreckt. Wie **Fig.3** zeigt ist der Dämpferkolben 2 innerhalb dieses bzw. durch diesen Führungszylinder(s) 6 geführt. Aus **Fig.3** geht ferner die Anbindung der Kolbenstange 4 am Dämpferkolben 2 hervor. In **allen Figuren** erkennt man ferner eine (dem Fachmann grundsätzlich bekannte und im einleitenden Beschreibungsteil hinsichtlich ihrer Funktion erläuterte) Zuganschlagfeder 7, die im Ringraum 8 zwischen der Dämpfer-Kolbenstange 4 und dem Führungszylinder 6 angeordnet bzw. geführt ist.

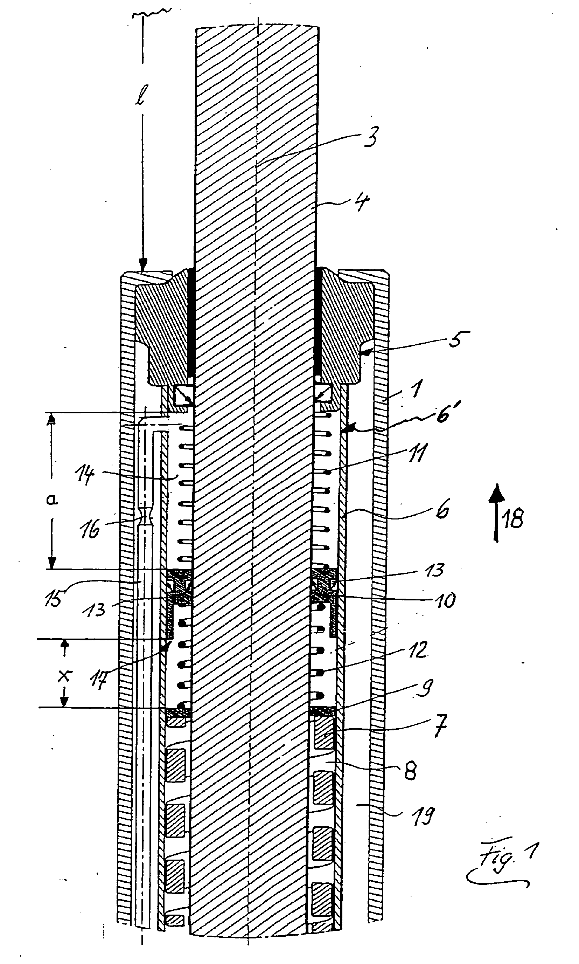

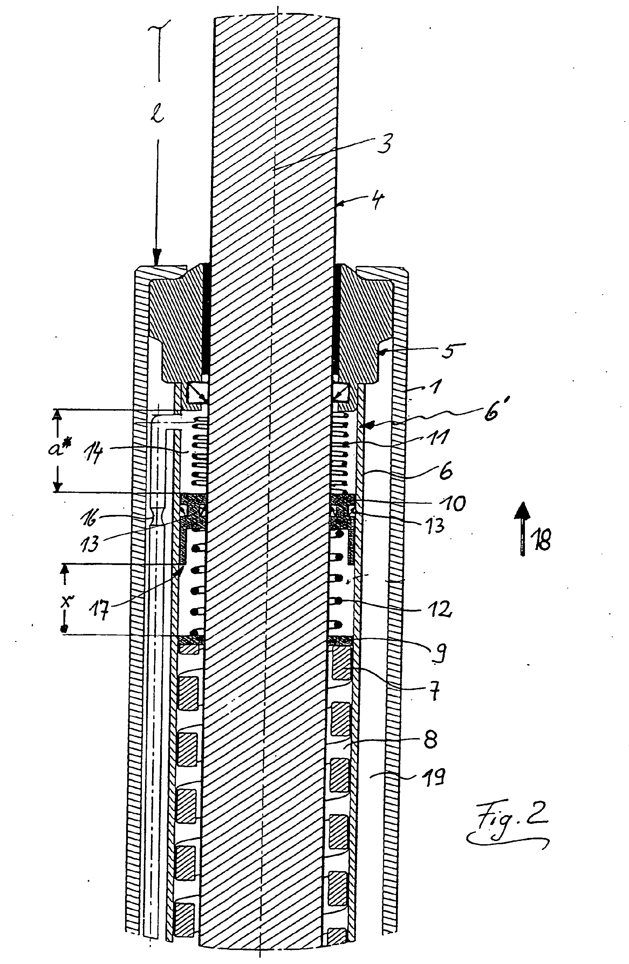

Beim ersten Ausführungsbeispiel nach den **Figuren 1, 2** ist diese Zuganschlagfeder 7 mit ihrem unteren (figürlich nicht dargestellten Ende) am figürlich ebenfalls nicht dargestellten Dämpferkolben (2) abgestützt. Auf das gegenüberliegende obere Ende der Zuganschlagfeder 7 ist eine ebenfalls im Ringraum 8 längs der Längsachse 3 verschiebbare Stützscheibe 9 aufgelegt. Auf dieser Stützscheibe 9 bzw. an deren der Zuganschlagfeder 7 abgewandten Seite ist wiederum ein als Wendel-Druckfeder ausgebildetes sog. Abstands-Federelement 12 abgestützt, das mit seinem gegenüberliegenden Ende an einem sog. Verlagerungs-Kolben 10 anliegt, der ebenfalls im Ringraum 8 längsverschiebbar geführt ist. Wie ersichtlich ist dieser Verlagerungs-Kolben 10 dabei sowohl durch die Kolbenstange 4 als auch durch den Führungszylinder 6 geführt, wobei im Verlagerungs-Kolben 10 geeignete Ring-Dichtelemente 13 sowohl zur Kolbenstange 4 als auch zum Führungszylinder 6 hin vorgesehen sind. Diese Ring-Dichtelemente 13 dienen der Abdichtung eines sog. Stützraumes 14, der sich auf der dem Abstands-Federelement 12 abgewandten Seite des Verlagerungs-Kolbens 10 befindet. Dieser Stützraum 14 wird durch den Verlagerungs-Kolben 10 in Zusammenwirken mit dem Führungszylinder 6 und der Abschlussbuchse 5 begrenzt. Der entsprechende, den Verlagerungs-Kolben 10 führende und dabei den besagten Stützraum 14 begrenzende Abschnitt des Führungszylinders 6 sowie der zusammen mit diesem ebenfalls den Stützraum 14 begrenzende Abschnitt der Abschlussbuchse 5 werden daher im weiteren als sog. Stütz-Zylinder 6' bezeichnet, der wie ersichtlich nach unten hin offen ist.

Weiterhin auf das erste Ausführungsbeispiel nach den **Figuren 1, 2** Bezug nehmend ist im Stützraum 14 zwischen dem Boden des sog. Stütz-Zylinders 6', d.h. der Abschlussbuchse 5, und dem Verlagerungs-Kolben 10 ein als Wendel-Druckfeder ausgebildetes sog. Nachstell-Federelement 11 eingespannt bzw. abgestützt. Ferner mündet in den Stützraum 14 eine Hydraulikleitung 15, die im Ringraum 19 zwischen dem Dämpfer-Gehäuse 1 und dem Führungszylinder 6 weiterverläuft und schließlich bspw. unterhalb des Dämpferkolbens (2) in einem Raum im Stoßdämpfer mündet, in welchem sich stets Hydraulikmedium des hydraulischen Stoßdämpfers unter geringem Druck befindet. Hierdurch ist gewährleistet, dass der Stützraum 14 über die Hydraulikleitung 15 praktisch stets vollständig mit dem Hydraulikmedium (des Stoßdämpfers) befüllt ist bzw. befüllt wird. In dieser Hydraulikleitung 15 ist im übrigen ein hier als Querschnittsverengung ausgebildetes Drosselelement 16 vorgesehen, auf dessen Funktion im weiteren noch eingegangen wird. Kurz auf den Verlagerungs-Kolben 6 zurückkommend besitzt dieser einen ringförmigen Bodenabschnitt, der außenseitig am Führungszylinder 6 bzw. am Stütz-Zylinder 6' und innenseitig an der Kolbestange 4 anliegt. Von diesem Bodenabschnitt ragt in Richtung zur Stützscheibe 9 hin ein ringförmig umlaufender Steg 17 ab, dessen freie Stirnseite als Anschlag für die Stützscheibe 9 (und somit für die Zuganschlagfeder 6) fungiert, wie im weiteren näher erläutert wird, weshalb dieser ringförmige Steg 17 im weiteren auch als Anschlag 17 bezeichnet wird.

In den beiden **Figuren 1, 2** ist der Stoßdämpfer jeweils in der sog. Neutrallage dargestellt, in welcher der Fahrzeug-Aufbau gegenüber dem Radführungselement, d.h. dem Dämpfer-Gehäuse 1, weder eingefedert noch ausgefedert ist. Bei einem im Fahrbetrieb auftretenden sog. dynamischen Ausfederungsvorgang der zugehörigen figürlich nicht dargestellten Tragfeder, über welche der Fzg.-Aufbau in bekannter Weise an einem Radführungselement abgestützt ist, wird der Dämpferkolben (2) und somit die Kolbenstange 4 ausgehend von der figürlich dargestellten Position gemäß Pfeilrichtung 18 nach oben bewegt, wobei die Zuganschlagfeder 7 unverformt soweit mitgenommen wird, bis die Stützscheibe 9 am Anschlag 17 zum Anliegen kommt. Unter der Voraussetzung, dass der Verlagerungs-Kolben 10 aufgrund des sich im Stützraum 14 befindenden Hydraulikmediums kurzfristig nicht gemäß Pfeilrichtung 18 verlagerbar ist, wird dann bei weiterem dynamischen Ausfedern der genannten Tragfeder, d.h. bei einer weiteren Verschiebung der Kolbenstange 4 gemäß Pfeilrichtung 18 hervorgerufen durch den Fahrbetrieb des Fahrzeugs, die Zuganschlagfeder 7 komprimiert, so dass hierdurch der Tragfeder in ihrer Wirkung die Zuganschlagfeder 7 parallel geschaltet wird. Dass bei diesem geschilderten Vorgang der Verlagerungs-Kolben 10 im wesentlichen nicht in Pfeilrichtung 18 verschoben wird, ist dabei durch das Drosselelement 16 in der Hydraulikleitung 15 gewährleistet. Dieses verhindert nämlich, dass kurzfristig eine nennenswerte Menge von Hydraulikmedium aus dem Stützraum 14 abgeführt wird, was aber für eine entsprechende Verschiebung des Verlagerungs-Kolbens 10 erforderlich wäre.

Ein entsprechend den bisherigen Erläuterungen gestalteter Stoßdämpfer sei nun in einem Kraftfahrzeug mit veränderbarem Höhenstand, bei dem also der Abstand I zwischen dem nicht dargestellten Fahrzeug-Aufbau und dem Radführungselement, so bspw. der Oberkante des Dämpfer-Gehäuses 1, statisch veränderbar ist, verbaut. In der in **Figur 1** dargestellten Neutrallage sind die Verhältnisse bei niedrigem Höhenstand dargestellt, wobei der freie Ausfederweg der nicht dargestellten Tragfeder ohne Wirksamwerden der Zuganschlagfeder 7 durch die Strecke x gekennzeichnet ist, d.h. beim dynamischen Ausfedern der Tragfeder im Fahrbetrieb kann der hier figürlich nicht dargestellte Dämpferkolben (2) um die Strecke x gemäß Pfeilrichtung 18 nach oben verschoben werden, bis die Stützscheibe 9 und somit quasi die Zuganschlagfeder 7 am Anschlag 17 zum Anliegen kommt und daraufhin wirksam wird.

Würde nun ausgehend vom Zustand nach **Figur 1** der Höhenstand des Fzg.-Aufbaus und somit der Abstand I statisch vergrößert, so würde auch hierdurch die Dämpfer-Kolbenstange 4 mit dem Dämpferkolben (2) um ein gewisses Maß in Pfeilrichtung 18 nach oben verfahren werden. Wäre der Anschlag 17 unverlagerbar (so bspw. fest am Gehäuse 1 befestigt), so würde sich hierdurch der freie Ausfederweg x der Tragfeder verringern, d.h. die Zuganschlagfeder 7 würde früher am Anschlag 17 anliegen und in Aktion treten als dies bei niedrigem Höhenstand der Fall ist. Um diesen Effekt zu verhindern, verlagert sich nun der Anschlag 17 bei einer Veränderung des Höhenstandes selbsttätig derart, dass sich die Zuganschlagfeder 7 unabhängig vom jeweiligen Fzg.-Höhenstand nach einem im wesentlichen gleichen dynamischen Aus-Federweg der Tragfeder direkt oder indirekt, d.h. hier über die Stützscheibe 9, am Anschlag 17 abstützt.

Wenn also ausgehend vom Gleichgewichts-Zustand nach **Figur 1** der Höhenstand des Fzg.-Aufbaus und somit der Abstand I statisch vergrößert wird, so wird zunächst die Dämpfer-Kolbenstange 4 mit dem Dämpferkolben (2) um ein gewisses Maß in Pfeilrichtung 18 nach oben verfahren. Hierdurch wird das Abstands-Federelement 12 komprimiert und die daraus resultierende Federkraft auf den Verlagerungs-Kolben 10 übertragen, der diese Kraft in das Nachstell-Federelement 11 sowie in das im Stützraum 14 befindliche Hydraulikmedium einleitet. Da es sich bei einer solchen statischen Höhenstandsänderung um einen relativ langsam ablaufenden Vorgang handelt, wird als Folge hiervon ein Teil des Hydraulikmediums aus dem Stützraum 14 über die Hydraulikleitung 15 verdrängt bzw. abgeführt und der Verlagerungs-Kolben in Pfeilrichtung 18 verschoben, wobei sich der Stützraum 14 im Stütz-Zylinder 6' verkleinert. Dies erfolgt dabei solange bzw. soweit, bis ein Kräftegleichgewicht zwischen den auf den Verlagerungs-Kolben 10 einwirkenden Kräften, nämlich seitens des Abstands-Federelementes 12 einerseits und seitens des Nachstell-Federelementes 11 und dem geringen Hydraulikdruck andererseits, wieder hergestellt ist. Der entsprechende Zustand ist in **Figur 2** dargestellt, wobei wie ersichtlich der freie Ausfederweg x, der wesentlich durch die Lage des Anschlags 7 und somit durch die Position des Verlagerungs-Kolbens 10 bestimmt ist, in beiden Figuren im wesentlichen gleich ist. Hingegen ist das Längenmaß a des Stützraumes 14 in Axialrichtung beim Zustand nach **Figur 1** erheblich größer als das entsprechende Längenmaß a* beim Zustand nach **Figur 2**, der die Verhältnisse in Neutrallage bei großem Höhenstand wiedergibt.

Das genannte erste Nachstell-Federelement 11 und das genannte zweite Abstands-Federelement 12 sind also solchermaßen ausgelegt, dass sich unabhängig vom jeweiligen Höhenstand ohne fahr-dynamische Federvorgänge, d.h. im statischen Zustand in Neutrallage des Aufbaus, der gewünschte freie Ausfederweg x zwischen dem Anschlag 7, der durch die Position des Verlagerungs-Kolbens 10 bestimmt ist, und der Zuganschlagfeder 7 selbsttätig einstellt. Beim soweit anhand der **Figuren 1, 2** beschriebenen System handelt es sich um ein passives System; es jedoch auch ein aktives System möglich, wenn durch ein entsprechendes bspw. elektrisch schaltbares Ventil ein Volumenstrom von Hydraulikmedium aus dem bzw. in den Stützraum 14 veränderbar gestaltet oder überhaupt verhindert wird.

Ein anderes Ausführungsbeispiel zeigt **Figur 3**, wobei hier ein vom Führungszylinder 6 unabhängiger, eigenständiger Stütz-Zylinder 6', der zum Fahrzeug-Rad, d.h. nach unten hin geschlossen und zum Fahrzeug-Aufbau, d.h. nach oben hin offen ist und dabei die Dämpfer-Kolbenstange 4 umgibt, nahe des bzw. knapp oberhalb des Dämpferkolbens 2 vorgesehen ist. Wie ersichtlich ist auch hier innerhalb des Stütz-Zylinders 6' ein Verlagerungs-Kolben 10 in Richtung der Längsachse 3 verschiebbar geführt, wobei der hier gezeigte Verlagerungs-Kolben 10 eine Führung für das Abstands-Federelement 12 aufweist. Dieses erstreckt sich vom Verlagerungs-Kolben 10 bis zum ebenfalls eine Führung für dieses Federelement 12 aufweisenden Stützscheibe 9, auf der die Zuganschlagfeder 7 aufliegt.

Dargestellt sind abermals die Verhältnisse bei statischer Neutrallage des Fzg.-Aufbaus, so dass der gewünschte freie Ausfederweg x für die Zuganschlagfeder 7 vorliegt. Erst nachdem diese Zuganschlagfeder 7 bzw. die Stützscheibe 9 bei einem dynamischen Ausfedervorgang der nicht dargestellten Aufbau-Tragfeder aufgrund einer Verlagerung des Dämpferkolbens 2 gemäß Pfeilrichtung 18 nach oben am Anschlag 17, der hier von der Oberkante des das Abstands-Federelement 12 aufnehmenden Doppel-Steges 17 des Verlagerungs-Kolbens 10 gebildet wird, zum Anliegen kommt, wird mit einem weiteren Ausfedern und somit einer weiteren Verschiebung des Dämpferkolbens 2 in Pfeilrichtung 18 die Zuganschlagfeder 7, die sich mit ihrem anderen, hier figürlich nicht dargestellten Ende bspw. an der Abschlussbuchse 5 (vgl. **Fig.1)** abstützen kann, komprimiert. Dabei bleibt das Volumen des mit Hydraulikmedium aus dem Stoßdämpfer befüllten Stützraumes 14, der vom nach unten geschlossenen Stütz-Zylinder 6' sowie vom Verlagerungs-Kolben 10 begrenzt ist, unverändert. Bei einer statischen Veränderung des Höhenstandes und somit des hier gegenüber Fig.1,2 anderen Abstandsmaßes I' zwischen Dämpfer-Gehäuse 1 und Fzg.-Aufbau muss Hydraulikmedium in den Stützraum 14 eingeleitet bzw. aus diesem abgeleitet werden. Dies erfolgt über einen definierten engen Ringspalt 20 zwischen dem Verlagerungs-Kolben 10 und der Dämpfer-Kolbenstange 4. Gegenüber der Ausführungsform nach den Figuren 1,2 wird hier bei **Fig.3** der Verlagerungs-Kolben 10 alleine durch den Stütz-Zylinder 6' geführt und es sind zwischen diesen Bauteilen keine Ring-Dichtelemente (Bezugsziffer 13 in Fig.1,2) vorgesehen.

### Bezugszeichenliste:

- 1: Dämpfer-Gehäuse, Gehäuse (des Stoßdämpfers)
- 2: Dämpfer-Kolben
- 3: Längsachse (des Stoßdämpfers)
- 4: Dämpfer-Kolbenstange
- 5: Abschlussbuchse
- 6: Führungszylinder
- 6': Stütz-Zylinder
- 7: Zuganschlagfeder
- 8: Ringraum
- 9: Stützscheibe
- 10: Verlagerungs-Kolben
- 11: Nachstell-Federelement
- 12: Abstands-Federelement
- 13: Ring-Dichtelement
- 14: Stützraum
- 15: Hydraulikleitung
- 16: Drosselelement
- 17: Steg /Anschlag
- 18: Pfeilrichtung
- 19: Ringraum
- 20: Ringspalt

## Patentansprüche

1. Fahrzeug-Federungssystem mit veränderbarem Höhenstand des FahrzeugAufbaus gegenüber einem Radführungselement, mit einer Tragfeder und einem Stoßdämpfer, der eine Zuganschlagfeder (7) aufweist, die bei entsprechend starkem Ausfedern der Tragfeder mit einem unterschiedlich positionierbaren Anschlag (17) zusammenwirkt, der in Abhängigkeit vom Fahrzeug-Höhenstand und somit vom Abstand (I, I') zwischen dem Radführungselement (1) und dem Fahrzeug-Aufbau derart verlagerbar ist, dass sich unabhängig vom jeweiligen Fahrzeug-Höhenstand die Zuganschlagfeder (7) nach einem im wesentlichen gleichen Federweg der Tragfeder direkt oder indirekt am Anschlag (17) abstützt;
**dadurch gekennzeichnet, dass** der Anschlag (17) an einem in einem Stütz-Zylinder (6') geführten Verlagerungs-Kolben (10) vorgesehen oder abgestützt ist, der mit seiner dem Anschlag (17) abgewandten Seite einen mit einem Hydraulikmedium befüllten Stützraum (14) im Stütz-Zylinder (6') begrenzt, in welchem ferner ein erstes sog. Nachstell-Federelement (11) zwischen dem Verlagerungs-Kolben (10) und dem Boden des Stütz-Zylinders (6') eingespannt ist, und dass ein dem Nachstell-Federelement (11) entgegengerichtetes zweites sog. Abstands-Federelement (12) zwischen dem Anschlag (17) und der Zuganschlagfeder (7) vorgesehen ist.

2. Fahrzeug-Federungssystem nach Anspruch 1, wobei ein Gehäuse (1) des hydraulischen Stoßdämpfers die Zuganschlagfeder (7) aufnimmt und als Radführungselement fungiert, während die im Dämpfer-Gehäuse (1) verschiebbare Dämpfer-Kolbenstange (4) mit ihrem freien, aus dem Gehäuse (1) herausragenden Ende am Fahrzeug-Aufbau angebunden ist,
**dadurch gekennzeichnet, dass** der unter anderem vom zum Fahrzeug-Aufbau hin geschlossenen und zum Fahrzeug-Rad hin offenen Stütz-Zylinder (6') begrenzte Stütz-Raum (14) im dem Fahrzeug-Aufbau zugewandten Endabschnitt des Dämpfer-Gehäuses (1) vorgesehen und über eine Hydraulikleitung (15) mit einem das Hydraulikmedium des Stoßdämpfers enthaltenden Raum im Bereich des dem Fahrzeug-Rad zugewandten Endabschnittes des Dämpfer-Gehäuses (1) verbunden ist.

3. Fahrzeug-Federungssystem nach Anspruch 2,
**dadurch gekennzeichnet, dass** in der Hydraulikleitung (15) ein Drosselelement (16) vorgesehen ist.

4. Fahrzeug-Federungssystem nach Anspruch 3,
**dadurch gekennzeichnet, dass** der freie Durchström-Querschnitt des Drosselelements (16) gezielt veränderbar ist und/oder dass ein mit einem Rückschlagventil versehener Bypass zum Drosselelement (16) vorgesehen ist.

5. Fahrzeug-Federungssystem nach Anspruch 1, wobei ein Gehäuse (1) des hydraulischen Stoßdämpfers die Zuganschlagfeder (7) aufnimmt und als Radführungselement fungiert, während die im Dämpfer-Gehäuse (1) verschiebbare Dämpfer-Kolbenstange (4) mit ihrem freien, aus dem Gehäuse (1) herausragenden Ende am Fahrzeug-Aufbau angebunden ist,
**dadurch gekennzeichnet, dass** der zum Fahrzeug-Rad hin geschlossene und zum Fahrzeug-Aufbau hin offene und dabei die Dämpfer-Kolbenstange umgebende Stütz-Zylinder (6') nahe des Dämpferkolbens (2) vorgesehen ist und dass über einen definierten Ringspalt (20) zwischen dem Verlagerungs-Kolben (10) und dem Dämpferkolben (2) und/oder zwischen dem Verlagerungs-Kolben (10) und dem Stütz-Zylinder (6') ein Übertritt von Hydraulikmedium in den bzw. aus dem Stützraum (14) möglich ist.

## Claims

1. A vehicle suspension system, the height of the vehicle body being variable with respect to a wheel-guiding element, having a bearing spring and a shock absorber comprising a tension stop spring (7), which, on correspondingly intensive rebounding of the bearing spring, cooperates with a variably positionable stop (17), which is displaceable as a function of the vehicle height, and thus of the distance (I, I') between the wheel-guiding element (1) and the vehicle body, in such a way that, independently of the respective vehicle height, the tension stop spring (7) is directly or indirectly supported, after a substantially uniform excursion of the bearing spring, on the stop (17), **characterised in that** the stop (17) is provided or supported on a displacement piston (10), which is guided in a support cylinder (6') and of which the side remote from the stop (17) delimits a support chamber (14), which is filled with a hydraulic medium, in the support cylinder (6'), in which chamber a first so-called adjusting spring element (11) is also secured between the displacement piston (10) and the base of the support cylinder (6'), and **in that** a second so-called spacer spring element (12), which opposes the adjusting spring element (11), is provided between the stop (17) and the tension stop spring (7).

2. A vehicle suspension system according to claim 1, wherein a housing (1) of the hydraulic shock absorber receives the tension stop spring (7) and acts as a wheel-guiding element, while the absorber piston rod (4), which is displaceable in the absorber housing (1), is connected to the vehicle body at its free end, which protrudes from the housing (1), **characterised in that** the support chamber (14), which is delimited, *inter alia,* by the support cylinder (6'), which is closed toward the vehicle body and open toward the vehicle wheel, is provided in the end portion, facing the vehicle body, of the absorber housing (1) and is connected, via a hydraulic line (15), to a chamber, containing the hydraulic medium of the shock absorber, in the region of the end portion, facing the vehicle wheel, of the absorber housing (1).

3. A vehicle suspension system according to claim 2, **characterised in that** a throttling element (16) is provided in the hydraulic line (15).

4. A vehicle suspension system according to claim 3, **characterised in that** the free flow cross section of the throttling element (16) is purposely variable, and/or **in that** a bypass, provided with a check valve, to the throttling element (16) is provided.

5. A vehicle suspension system according to claim 1, wherein a housing (1) of the hydraulic shock absorber receives the tension stop spring (7) and acts as a wheel-guiding element, while the absorber piston rod (4), which is displaceable in the absorber housing (1), is connected to the vehicle body at its free end, which protrudes from the housing (1), **characterised in that** the support cylinder (6'), which is closed toward the vehicle wheel and open toward the vehicle body and thus surrounds the absorber piston rod, is provided in proximity to the absorber piston (2), and **in that** hydraulic medium is able to pass into or from the support chamber (14) via a defined annular gap (20) between the displacement piston (10) and the absorber piston (2) and/or between the displacement piston (10) and the support cylinder (6').

## Revendications

1. Système de suspension d'un véhicule à hauteur réglable du châssis du véhicule par rapport à un élément de guidage, comprenant un ressort de suspension et un amortisseur qui comporte un ressort de butée de traction (7) qui, lors d'une extension suffisamment prononcée du ressort de suspension, coopère avec une butée (17) positionnée différemment et déplaçable en fonction de la hauteur du véhicule et donc de la distance (1, 1') entre l'élément de guidage (1) et le châssis du véhicule, de sorte que le ressort de butée de traction (7) vienne s'appuyer directement ou indirectement sur la butée (17) indépendamment de la hauteur respective du véhicule et après une course d'extension essentiellement égale du ressort de suspension,
**caractérisé en ce que**
la butée (17) est prévue ou vient s'appuyer sur un piston de déplacement (10) guidé dans un cylindre de support (6'), lequel piston délimite, par sa face opposée à la butée (17) un espace de support (14) rempli d'un fluide hydraulique dans le cylindre de support (6'), dans lequel, en outre, un premier élément dit élément de ressort d'ajustage (11) est tendu entre le piston de déplacement (10) et le fond du cylindre de support (6'), et un deuxième élément dit élément de ressort d'écartement (12) opposé à l'élément de ressort d'ajustage (11) est prévu entre la butée (17) et le ressort de butée de traction (7).

2. Système de suspension d'un véhicule selon la revendication 1, un boîtier (1) de l'amortisseur hydraulique recevant le ressort de butée de traction (7) et exerçant la fonction de l'élément de guidage, alors que la tige de piston d'amortisseur (4) déplaçable dans le boîtier d'amortisseur (1) est reliée au châssis du véhicule par son extrémité libre dépassant du boîtier (1),
**caractérisé en ce que**
l'espace de support (14) délimité entre autres par le cylindre de support (6') fermé en direction du châssis du véhicule et ouvert en direction de la roue du véhicule est prévu dans la section d'extrémité du boîtier d'amortisseur (1) situé en regard du châssis du véhicule et relié dans la zone de la section d'extrémité du boitier d'amortisseur (1) située en regard de la roue du véhicule à l'espace contenant le fluide hydraulique de l'amortisseur par une conduite hydraulique (15).

3. Système de suspension d'un véhicule selon la revendication 2,
**caractérisé en ce qu'**
un élément d'étranglement (16) est prévu dans la conduite hydraulique (15).

4. Système de suspension d'un véhicule selon la revendication 3,
**caractérisé en ce que**
la section libre de transfert de l'élément d'étranglement (16) est modifiable de manière ciblée et/ou une dérivation vers l'élément d'étranglement (16) est munie d'un clapet anti-retour.

5. Système de suspension d'un véhicule selon la revendication 1, un boitier (1) de l'amortisseur hydraulique recevant le ressort de butée de traction (7) et faisant office d'élément de guidage, tandis que la tige de piston d'amortisseur (4) déplaçable dans le boîtier d'amortisseur (1) et reliée au châssis du véhicule par son extrémité libre du boîtier (1),
**caractérisé en ce que**
le cylindre de support (6') fermé en direction de la roue du véhicule et ouvert en direction du châssis du véhicule et enveloppant ainsi la tige de piston d'amortisseur est prévu à proximité du piston d'amortisseur (2), et un passage du fluide hydraulique dans l'espace de support (14) ou venant de ce dernier, est possible par un intervalle annulaire (20) défini entre le piston de déplacement (10) et le piston d'amortisseur (2) et/ou entre le piston de déplacement (10) et le cylindre de support (6').
